# EUROPÄISCHE PATENTSCHRIFT

(11) **EP 3 552 296 B1**
(45) Veröffentlichungstag und Bekanntmachung des Hinweises auf die Patenterteilung: **01.11.2023**
(21) Anmeldenummer: 17825758.0
(22) Anmeldetag: 05.12.2017
(51) Int. Cl.: H05B 45/50

(54) **VERFAHREN ZUM IDENTIFIZIEREN DES TYPS EINER EINEM BETRIEBSGERÄT FÜR LEUCHTMITTEL ZUGEFÜHRTEN VERSORGUNGSSPANNUNG**
METHOD FOR IDENTIFYING THE TYPE OF SUPPLY VOLTAGE SUPPLIED TO AN OPERATING DEVICE FOR LIGHTING MEANS
PROCÉDÉ D'IDENTIFICATION DU TYPE D'UNE TENSION D'ALIMENTATION FOURNIE À UN DISPOSITIF DE COMMANDE DE MOYENS D'ÉCLAIRAGE

(30) Priorität: 07.12.2016 DE 102016224349; 23.10.2017 AT 23217 U
(43) Veröffentlichungstag der Anmeldung: 16.10.2019
(73) Patentinhaber: Tridonic GmbH & Co KG, 6851 Dornbirn (AT)
(72) Erfinder: SANDHOLZER, Markus, 6844 Altach (AT); GÓMEZ, Juan, Morís, 33870 Tineo (ES); SZYLER, Blazej, Yarm TS15 9RX (GB)
(74) Vertreter: Thun, Clemens
(86) Internationale Anmeldenummer: PCT/EP2017/081527
(87) Internationale Veröffentlichungsnummer: WO 2018/104302

(56) Entgegenhaltungen:
- EP-A1- 2 747 516
- WO-A1-2012/083325
- WO-A1-2014/013407
- WO-A1-2016/168659
- CN-A- 105 633 911
- DE-A1-102007 040 555
- DE-A1-102012 206 056
- US-A1- 2006 066 258

## Beschreibung

Die vorliegende Erfindung betrifft ein Verfahren, mit dessen Hilfe der Typ einer einem Betriebsgerät für Leuchtmittel zugeführten Versorgungsspannung identifiziert werden kann bzw. mit dessen Hilfe festgestellt werden kann, ob eingangsseitig an einem Betriebsgerät eine ausreichende Versorgungsspannung anliegt. Ferner betrifft die vorliegende Erfindung eine entsprechende Schaltungsanordnung zum Identifizieren des Typs einer zugeführten Versorgungsspannung sowie ein Betriebsgerät hierfür.

In Beleuchtungssystemen, die beispielsweise zum Beleuchten größerer Gebäude oder Gebäudekomplexe vorgesehen sind, ist aus Sicherheitsgründen das Implementieren eines Notlichtbetriebs erforderlich. Das heißt, im Falle eines Notzustands muss durch zumindest einen Teil der Leuchten des Systems eine gewisse Grundbeleuchtung zur Verfügung gestellt werden, welche es Personen ermöglicht, sich sicher zu orientieren und das Gebäude ggf. zügig zu verlassen. Dies gilt insbesondere auch für den Fall, dass die allgemeine Stromversorgung der Leuchten aufgrund des Notzustands beeinträchtigt ist. Während früher zu diesem Zweck spezielle Leuchten ausschließlich als Notleuchten verwendet wurden, ist nunmehr überwiegend vorgesehen, normale Leuchten zu nutzen, die während eines Normalbetriebs in gleicher Weise wie alle Leuchten funktionieren, im Bedarfsfall allerdings zusätzlich auch die erwähnte Notbeleuchtung zur Verfügung stellen.

Um diesen sogenannten Notlichtleuchten die für eine Aufrechterhaltung der Grundbeleuchtung erforderliche Energie zur Verfügung stellen zu können, sind einerseits lokale Lösungen auf Basis von Akkumulatoren oder Batterien sowie andererseits Einrichtungen zur zentralen Notlichtversorgung bekannt. Im Falle einer zentralen Notlichtversorgung ist beispielsweise vorgesehen, dass anstelle der üblichen Versorgungsspannung in Form einer Wechselspannung die für den Notbetrieb vorgesehenen Leuchten eine Versorgungsspannung in Form einer Gleichspannung erhalten. Dieser Wechsel in der Stromversorgung wird durch die entsprechenden Leuchten bzw. durch deren Betriebsgeräte erkannt, welche daraufhin dann den speziellen Notbetrieb initiieren. Weiterhin sind allerdings zwischenzeitlich auch Einrichtungen zur zentralen Notlichtversorgung bekannt, bei denen im Falle eines Notzustands keine reine Gleichspannung auf die Stromversorgungsleitungen gegeben wird, sondern stattdessen eine sogenannte Quasi-DC-Versorgungsspannung zur Verfügung gestellt wird. Es handelt sich hierbei um eine lediglich aus positiven Halbwellen bestehende Versorgungsspannung, welche allerdings wiederum den Betriebsgeräten der Notlichtleuchten signalisieren soll, dass ein besonderer Zustand vorliegt, der den Wechsel in einen Notbetrieb erfordert.

Für die Betriebsgeräte der Notlichtleuchten ist also erforderlich, dass diese in der Lage sind, den Typ der eingangsseitig anliegenden Versorgungsspannung zu erkennen und insbesondere zwischen einer Wechselspannung, einer Quasi-DC-Versorgungsspannung sowie einer klassischen Versorgungsgleichspannung zu unterscheiden. Aus dem Stand der Technik sind hierfür verschiedene Lösungen bekannt, wobei beispielsweise in der DE 10 2007 040 555 A1 vorgesehen ist, eine Schaltungsanordnung zu verwenden, die einen Brückengleichrichter enthält, von dem zwei Messstromkreise ausgehen, wobei in dem einen Messstromkreis positive Stromanteile und in dem anderen negative Stromanteile fließen. Die Identifizierung der Art der anliegenden Spannung erfolgt dann durch eine entsprechende Auswertung der über die beiden Messstromkreise erhaltenen Stromanteile. Hierbei werden insbesondere aus den Stromanteilen abgeleitete Spannungen mit zwei verschiedenen Referenzspannungen verglichen.

In der WO 2016/168659 A1 wird eine Notlichteinheit mit einem Notlicht und einer Stromausfallerkennungsschaltung gezeigt, welches ausgebildet ist die eingehende Versorgungsspannung zu analysieren. Hierbei wird eine Spitzenwerterkennung der gleichgerichteten Versorgungsspannung durchgeführt, wobei der ermittelte Spitzenwert mit einem Referenzwert verglichen wird. Ebenfalls wird erkannt, ob die Amplitude der erfassten Versorgungsspannung für den Betrieb des Notlichts ausreicht.

In der US 2006/0066258 A1 wird ein Notlichtsystem beschrieben, welches die eingehende Versorgungsspannung analysiert. Hierbei wird ein Vergleich der Eingangsspannung mit einem Referenzwert gezeigt, wobei ein Stromausfall detektiert wird, sobald die Eingangsspannung unter einem Referenzwert liegt. Hierbei ist beschrieben, dass das System unterschiedliche Spannungsamplituden der zur Verfügung stehenden Versorgungsspannung, welche stets eine Wechselspannung ist, erkennt.

In der WO 2012/083325 A1 wird ein Betriebsgerät für Leuchtmittel, mit separaten Messkreisen, vorgeschlagen, um einem Gleichrichtungsmittel gleichgerichtete Spannung in eine positive und eine negative Spannungskomponente zu zerlegen, wobei die Spannung als Wechselspannung, als pulsierende Gleichspannung oder als konstante Gleichspannung vorliegen kann. Das Betriebsgerät weist weiterhin eine Auswerteschaltung auf, welche die Spannungskomponenten der beiden Messstromkreise zur Identifizierung der Art der anliegenden Spannung auswertet. Zudem ist eine Analyseschaltung vorhanden, die über einen Analog-Digital-Wandler die Spannungskomponenten analysiert.

Die DE 10 2012 206 056 A1 schlägt ein Betriebsgerät für Leuchtmittel vor, wobei das Betriebsgerät an eine pulsierende Versorgungsspannung angeschlossen ist. Das Betriebsgerät verfügt über Erfassungsmittel zur getrennten Erfassung der positiven Spannungskomponente und der negativen Spannungskomponente der Versorgungsspannung und zur Erzeugung eines Messsignals, in welchem beide Spannungskomponenten unterschiedlich gewichtet sind. Weiterhin weist das Betriebsgerät eine Auswerteeinheit zum Auswerten des Messsignals mit Hilfe eines Schwellwertgebers auf, sowie eine Steuereinheit, die dazu ausgelegt ist, auf Basis der von der Auswerteeinheit durchgeführten Auswertung auf einen logischen Zustand zu schließen, und abhängig von diesem logischen Zustand ein Steuersignal zur Steuerung des Dimmgrads, der Farbe und/oder der Farbtemperatur des angeschlossenen Leuchtmittels zu erzeugen.

Es hat sich nunmehr gezeigt, dass in gewissen Situationen die aus dem Stand der Technik bekannten Lösungen keine eindeutige Identifizierung des Typs der zugeführten Versorgungsspannung erlauben. Diese Gefahr besteht insbesondere dann, wenn die ausgangsseitige Last des Betriebsgeräts sehr gering ist, wenn also beispielsweise die von dem Betriebsgerät betriebenen Leuchtmittel mit geringer Leistung, beispielsweise bei einem niedrigen Dimmlevel betrieben werden. In diesem Fall nähert sich der Verlauf der bewerteten Versorgungsspannung im Falle einer Wechselspannung dem Verlauf einer Quasi-DC-Versorgungsspannung an, da aufgrund der sehr kleinen Ausgangsleistungen die letztendlich bewertete Spannung im Falle einer Versorgungs-Wechselspannung keinen Nulldurchgang mehr erreicht. Bei der bislang bevorzugten Vorgehensweise, nämlich die Bewertung des Versorgungsspannungs-Typs anhand eines Vergleichs mit zwei Referenzspannungen vorzunehmen, ist es in diesem Fall dann nicht mehr möglich, eindeutig zwischen den verschiedenen Versorgungsspannungs-Typen zu unterscheiden.

Der vorliegenden Erfindung liegt deshalb einerseits die Aufgabenstellung zugrunde, die aus dem Stand der Technik bekannten Lösungen zur Identifizierung des Typs einer zur Verfügung gestellten Versorgungsspannung derart weiter zu verbessern, dass auch in den oben beschriebenen Situationen zuverlässig zwischen den verschiedenen Versorgungsspannungs-Typen unterschieden werden kann.

Die Aufgabe wird durch ein Verfahren zum Identifizieren des Typs einer einem Betriebsgerät für Leuchtmittel zugeführten Versorgungsspannung gemäß Anspruch 1 gelöst. Vorteilhafte Weiterbildungen der Erfindung sind Gegenstand der abhängigen Ansprüche. Weiterhin wird die Aufgabenstellung durch eine Schaltungsanordnung zum Identifizieren des Typs einer einem Betriebsgerät für Leuchtmittel zugeführten Versorgungsspannung gemäß Anspruch 9 gelöst.

Erfindungsgemäß wird also ein Verfahren zum Identifizieren des Anliegens einer ausreichenden eingangsseitigen Versorgungsspannung an einem Betriebsgerät vorgeschlagen, wobei hierbei eine dem Betriebsgerät zugeführte Versorgungsspannung gleichgerichtet und nachfolgend mit drei Referenzspannungen verglichen wird, und wobei weiterhin zum Identifizieren des Anliegens einer ausreichenden eingangsseitigen Versorgungsspannung das Anliegen einer eingangsseitigen Versorgungsspannung nur festgestellt wird, wenn in einer zeitlichen Messung die gleichgerichtete Versorgungsspannung mindestens eine der drei Referenzspannungen für einen vorgegebenen Zeitraum überschreitet. Hierbei ist erfindungsgemäß vorgesehen, dass zusätzlich auch der Spitzenwert der zugeführten Versorgungsspannung oder der gleichgerichteten Versorgungsspannung erfasst wird, und dass das Anliegen einer ausreichenden eingangsseitigen Versorgungsspannung nur dann festgestellt wird, wenn
i. anhand des Vergleichs der gleichgerichteten Versorgungsspannung mit den drei Referenzspannungen das Anliegen einer Versorgungsspannung festgestellt wird; und
ii. der Spitzenwert eine vorgegebene Bedingung erfüllt, wobei der Spitzenwert einen vorgegebenen Referenzwert überschreitet

Weiter erfindungsgemäß wird anhand des Vergleichs der gleichgerichteten Versorgungsspannung mit den drei Referenzspannungen zunächst der Typ der zur Verfügung stehenden Versorgungsspannung ermittelt, und der Spitzenwert mit dem vorgegebenen Referenzwert verglichen, wobei der vorgegebene Referenzwert von dem zuvor bestimmten Typ der zur Verfügung stehenden Versorgungsspannung abhängig ist.

Gemäß der vorliegenden Erfindung ist also vorgesehen, dass zusätzlich zu den beiden bislang verwendeten Referenzspannungen, mit denen die eingangsseitig zugeführte und gleichgerichtete Versorgungsspannung verglichen wird, noch eine dritte Referenzspannung herangezogen wird. Diese dritte Referenzspannung liegt vorzugsweise gemäß einem ersten Aspekt der vorliegenden Erfindung zwischen der ersten und zweiten Referenzspannung und ist so gewählt, dass sie auch bei ausgangsseitig geringen Lasten eindeutig eine Unterscheidung zwischen einer Versorgungs-Wechselspannung und einer Quasi-DC-Versorgungsspannung ermöglicht. Gemäß diesem Aspekt der Erfindung wird ein Verfahren zum Identifizieren des Typs einer an einem Betriebsgerät für Leuchtmittel zugeführten Versorgungsspannung vorgeschlagen, wobei die gleichgerichtete Versorgungsspannung mit einer ersten, niedrigen Referenzspannung, einer zweiten, hohen Referenzspannung sowie einer dritten Referenzspannung verglichen wird, welche zwischen der ersten und der zweiten Referenzspannung liegt, und wobei abhängig von den Vergleichsergebnissen ein Typ der zur Verfügung stehenden Versorgungsspannung bestimmt wird.

Ferner wird erfindungsgemäß eine Schaltungsanordnung zum Identifizieren des Anliegens einer ausreichenden eingangsseitigen Versorgungsspannung an einem Betriebsgerät für Leuchtmittel vorgeschlagen, wobei die Schaltungsanordnung Mittel zum Gleichrichten der dem Betriebsgerät zugeführten Versorgungsspannung sowie zum nachfolgenden Vergleichen mit drei Referenzspannungen aufweist, und wobei ferner eine Bewertungseinheit vorgesehen ist, welche zum Identifizieren des Anliegens einer ausreichenden eingangsseitigen Versorgungsspannung das Anliegen einer eingangsseitigen Versorgungsspannung nur feststellt, wenn die gleichgerichtete Versorgungsspannung mindestens eine der drei Referenzspannungen für einen vorgegebenen Zeitraum überschreitet. Hierbei ist erfindungsgemäß ferner vorgesehen, dass die Schaltungsanordnung dazu ausgebildet ist, zusätzlich den Spitzenwert der zugeführten Versorgungsspannung oder der gleichgerichteten Versorgungsspannung zu erfassen, und dass das Anliegen einer ausreichenden eingangsseitigen Versorgungsspannung nur dann festgestellt wird, wenn
i. anhand des Vergleichs der gleichgerichteten Versorgungsspannung mit den drei Referenzspannungen das Anliegen einer Versorgungsspannung festgestellt wird; und
ii. der Spitzenwert eine vorgegebene Bedingung erfüllt, wobei der Spitzenwert einen vorgegebenen Referenzwert überschreitet.

Hierbei ist die Schaltungsanordnung erfindungsgemäß dazu ausgebildet, anhand des Vergleichs der gleichgerichteten Versorgungsspannung mit den drei Referenzspannungen zunächst den Typ der zur Verfügung stehenden Versorgungsspannung zu ermitteln, wobei der Spitzenwert mit dem vorgegebenen Referenzwert verglichen wird, und wobei der vorgegebene Referenzwert von dem zuvor bestimmten Typ der zur Verfügung stehenden Versorgungsspannung abhängig ist.

Es hat sich gezeigt, dass durch das Einführen dieser zusätzlichen dritten Referenzspannung die Möglichkeit eröffnet wird, jederzeit schnell und zuverlässig zwischen den drei verschiedenen Versorgungsspannungstypen zu unterscheiden. Die Zuverlässigkeit beim Erkennen eines Notzustands kann hierdurch deutlich erhöht werden, was insgesamt zu einer deutlichen Verbesserung der Betriebssicherheit eines Beleuchtungssystems führt.

Gemäß einem besonders bevorzugten Ausführungsbeispiel der Erfindung kann hierbei vorgesehen sein, dass die dritte Referenzspannung veränderbar ist. Dies berücksichtigt den oben erwähnten Effekt, dass im Falle einer niedrigen ausgangsseitigen Last sich der Verlauf der gleichgerichteten Versorgungs-Wechselspannung an den Verlauf der Quasi-DC-Spannung annähert.

Das Durchführen der Vergleiche der gleichgerichteten Versorgungsspannung mit den drei Referenzspannungen kann in unterschiedlicher Weise erfolgen. Dabei kann sowohl ein gleichzeitiger Vergleich vorgenommen werden als auch vorgesehen sein, dass die Vergleiche zeitlich aufeinanderfolgend durchgeführt werden. Insbesondere bei der zweiten Variante kann die Anzahl der zum Identifizieren des Typs der eingangsseitigen Versorgungsspannung erforderlichen Komponenten gering gehalten werden. Das heißt, der mit Hilfe der erfindungsgemäßen Lösung erhaltene technische Vorteil kann mit einem relativ geringen Mehraufwand erzielt werden.

Erfindungsgemäß ist also vorgesehen, dass zusätzlich zu dem oben erläuterten Vergleichen der Spannung mit den verschiedenen Referenzspannungen auch der Spitzenwert der zugeführten Versorgungsspannung bzw. der gleichgerichteten Versorgungsspannung erfasst wird, wobei das Anliegen einer ausreichenden eingangsseitigen Versorgungsspannung für die Schaltungsanordnung bzw. das Betriebsgerät nur dann festgestellt wird, wenn der Spitzenwert eine vorgegebene Bedingung erfüllt, wobei der Spitzenwert einen vorgegebenen Referenzwert überschreitet.

Diese erfindungsgemäße Weiterbildung löst ein zusätzliches Problem, welches ebenfalls einen Ausgangspunkt für die vorliegende Erfindung bildet und welches bislang noch nicht berücksichtigt wurde.

Ob nämlich eine vorgegebene Referenzspannung durch die gleichgerichtete Versorgungsspannung überschritten wird oder nicht, wird üblicherweise anhand einer zeitlichen Messung durchgeführt. Das heißt, ein Überschreiten der Referenzspannung wird lediglich dann festgestellt, wenn dies für einen bestimmten vorgegebenen Zeitraum von beispielsweise 6 ms erfolgt. Abhängig davon allerdings, welche Frequenz die Versorgungsspannung aufweist, bedeutet dies, dass das Überschreiten einer Referenzspannung für Versorgungsspannungen verschiedener Frequenzen bei unterschiedlichen Maximalspannungen festgestellt wird. Um sicherzustellen, das auch bei höheren Frequenzen der Versorgungsspannungen das Überschreiten eines Referenzwertes zuverlässig erkannt wird, muss dementsprechend der Referenzwert geeignet angepasst, insbesondere abgesenkt werden, was dann allerdings wiederum dazu führt, dass bei Versorgungsspannungen mit niedrigen Frequenzen bereits frühzeitig ein Überschreiten der Referenzspannungen und damit das Anliegen einer ausreichender Versorgungsspannung festgestellt wird. Dies kann zu Problemen beim späteren Betrieb führen, weshalb idealerweise die Referenzspannungen abhängig von der Frequenz der Eingangsspannung sein sollten. Weiterhin können auch Toleranzen des internen Taktgebers (sog. clock tolerances) des Betriebsgeräts bzw. der Schaltungsanordnung zu Verschiebungen der oben beschriebenen Art führen.

Die erwähnte erfindungsgemäße Weiterbildung sieht nunmehr vor, dass ein zusätzliches Kriterium zur Bewertung der Frage, ob eine ausreichende Versorgungsspannung anliegt oder nicht, eingeführt wird, wobei es sich hierbei um den bereits erwähnten Spitzenwert der Versorgungsspannung bzw. der gleichgerichteten Versorgungsspannung handelt. Nur wenn einerseits anhand eines Vergleichs der gleichgerichteten Versorgungsspannung mit den verschiedenen Referenzspannungen das Anliegen einer Versorgungsspannung erkannt wird und gleichzeitig auch der Spitzenwert eine vorgegebene Bedingung erfüllt wird, das Anliegen einer ausreichenden Versorgungsspannung erkannt, sodass vermieden wird, dass bei Verwendung geeigneter Referenzspannungen, die für alle Frequenzen gültig sind, bei niedrigen Frequenzen eine vorzeitige Aktivierung des Betriebsgeräts stattfindet. Idealerweise ist hierbei vorgesehen, dass der Referenzwert, der mit dem der Spitzenwert verglichen wird, abhängig von dem zuvor bestimmten Typ der zur Verfügung stehemden Versorgungsspannung ist.

Dieser zuvor beschriebene Lösungsansatz der zusätzlichen Berücksichtigung des Spitzenwerts der Versorgungsspannung kann im Übrigen auch unabhängig davon verwendet werden, ob gemäß der oben beschriebenen Lösung die gleichgerichtete Versorgungsspannung mit drei verschiedenen Referenzwerten verglichen wird oder nicht. Auch für den Fall, dass lediglich anhand eines Vergleichs mit einer einzigen Referenzspannung festgestellt wird, ob eingangsseitig eine Versorgungsspannung anliegt oder nicht, kann mithilfe der zusätzlichen Berücksichtigung des Spitzenwerts der zuvor beschriebene Einfluss der Frequenzabhängigkeit zuverlässig ausgeschlossen werden.

Die Reaktion des Betriebsgeräts auf den erkannten Typ der Versorgungsspannung kann dann beispielsweise entsprechend den jeweiligen länderspezifischen Vorgaben eingestellt werden. Besonders bevorzugt ist hierbei vorgesehen, dass ein Benutzer drahtgebunden über eine Schnittstelle des Betriebsgeräts oder drahtlos die Betriebsmodi definieren kann, welche in Abhängigkeit des erkannten Typs der Versorgungsspannung auftreten sollen.

Nachfolgend soll die Erfindung anhand der beiliegenden Zeichnung näher erläutert werden. Es zeigen:
- Figur 1: schematisch ein Betriebsgerät zum Betreiben von Leuchtmitteln, welches gemäß der vorliegenden Erfindung ausgeführt ist;
- Figur 2: eine erfindungsgemäß ausgestaltete Schaltungsanordnung zum Bewerten der eingangsseitig anliegenden Versorgungsspannung;
- Figur 3a bis 3c: den Verlauf der drei verschiedenen Versorgungsspannungs-Typen im Falle einer verhältnismäßig hohen ausgangsseitigen Last;
- Figuren 4a bis 4c: den Verlauf der drei Versorgungsspannungs-Typen im Falle einer niedrigen ausgangsseitigen Last;
- Figuren 5a und 5b: den Einfluss der Frequenz einer Versorgungsspannung auf den Vergleich der Versorgungsspannung mit einer Referenzspannung;
- Figur 6: ein weiteres Schema der Frequenzabhängigkeit beim Feststellen, ob eine ausreichende Versorgungsspannung anliegt; und
- Figur 7: die erfindungsgemäße Vorgehensweise, um den Einfluss der Versorgungsspannungsfrequenz zu unterdrücken.

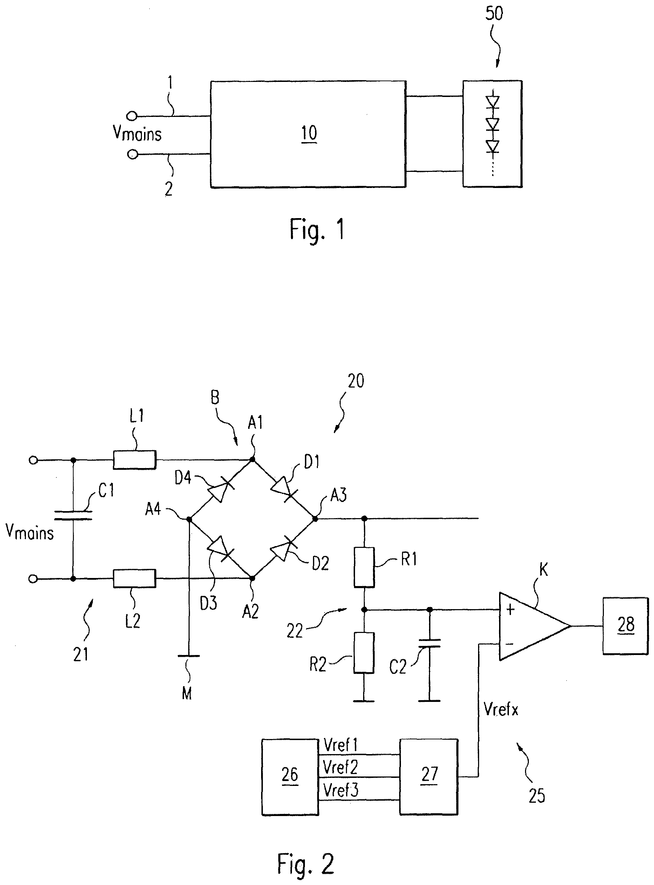

Anhand von Figur 1 soll zunächst die der Erfindung zugrunde liegende generelle Problemstellung erläutert werden. Dargestellt ist ein mit dem Bezugszeichen 10 bezeichnetes Betriebsgerät zum Betreiben von ausgangsseitig angeschlossenen Leuchtmitteln 50. Im dargestellten Ausführungsbeispiel wird von Leuchtmitteln in Form von LEDs ausgegangen, das der Erfindung zugrunde liegende Problem stellt sich allerdings unabhängig von der genauen Art der Leuchtmittel, weshalb die Erfindung also nicht auf einen speziellen Leuchtmitteltyp beschränkt ist. Es kann sich also in gleicher Weise auch um Gasentladungslampen, Halogenlampen, organische LEDs (OLEDs) oder andere Leuchtmittel handeln. Das Betriebsgerät 10 kann beispielsweise in Form eines sogenannten elektronischen Vorschaltgeräts oder eines Konverters ausgeführt sein.

Generell besteht die Funktionsweise des Betriebsgeräts 10 darin, die eingangsseitig anliegende Versorgungsspannung Vmains intern in eine für den Betrieb der Leuchtmittel 50 geeignete Betriebsspannung umzusetzen und diese Spannung dann über die Ausgangsanschlüsse abzugeben. Das Umsetzen der Versorgungsspannung Vmains erfolgt dabei abhängig von der Art der angeschlossenen Leuchtmittel 50 sowie gegebenenfalls von zusätzlichen Steuerinformationen in Form von Helligkeitsstellwerten, Anwesenheits-, Bewegungsinformation oder dergleichen, die dem Betriebsgerät 10 extern zugeführt werden können. Entsprechend Eingänge zum Übermitteln derartiger Steuerinformationen sind in Figur 1 aus Gründen der Übersichtlichkeit nicht gezeigt.

Eine weitere Funktion des dargestellten Betriebsgeräts 10 besteht darin, einen Notlichtbetrieb zu ermöglichen. Das heißt, die Leuchte, welche das Betriebsgerät 10 und die Leuchtmittel 50 beinhaltet, ist in ein größeres Beleuchtungssystem eingebunden, wobei im Falle eines Notzustands ein Notbetrieb der Leuchtmittel 50 erfolgen soll. Dies kann beispielsweise bedeuten, dass die LEDs 50 mit einer vorgegebenen Helligkeit dauerhaft betrieben werden, um in dem von der Leuchte beleuchteten Bereich sich befindenden Personen zu ermöglichen, sich ausreichend sicher zu orientieren und gegebenenfalls diesen Bereich zügig zu verlassen. Üblicherweise werden hierzu die Leuchtmittel 50 mit einer gegenüber der Maximalhelligkeit reduzierten Helligkeit von z.B. 50% betrieben, um im Falle begrenzt zur Verfügung stehender Energie trotz allem über einen längeren Zeitraum hinweg eine Notbeleuchtung aufrecht erhalten zu können.

Das Betriebsgerät 10 soll hierbei in der Lage sein, selbstständig einen entsprechenden Notzustand zu erkennen. In bekannter Weise wird dieser Notzustand dadurch signalisiert, dass anstelle einer Versorgungs-Wechselspannung eine Gleichspannung über die Stromversorgungsleitungen 1, 2 zur Verfügung gestellt wird. Sobald also das Betriebsgerät 10 erkennt, dass eingangsseitig keine Versorgungs-Wechselspannung mehr anliegt sondern stattdessen eine Gleichspannung, wird dieses in einen Notbetrieb wechseln und die nunmehr zur Verfügung gestellte Versorgungs-Gleichspannung wiederum in eine entsprechende Betriebsspannung für die Leuchtmittel 50 umsetzen, sodass diese in dem oben beschriebenen Notbetrieb betrieben werden.

In diesem Zusammenhang haben sich in der Vergangenheit insofern Veränderungen ergeben, als nunmehr oftmals zur Signalisierung eines Notzustands keine reine Gleichspannung über die Versorgungsleitungen 1, 2 zur Verfügung gestellt wird sondern eine sogenannte Quasi-Gleichspannung. Es handelt sich hierbei um eine lediglich aus positiven Halbwellen bestehende Wechselspannung, die allerdings wiederum dem Gesamtsystem einen Notzustand signalisieren soll. Das Betriebsgerät 10 sollte also insbesondere in der Lage sein, zwischen der Quasi-DC-Spannung und der normalen Wechsel-Versorgungsspannung zu unterscheiden, idealerweise sollte zusätzlich auch noch eine Erkennung einer reinen Gleichspannungsversorgung möglich sein. Lösungen hierfür sind aus dem Stand der Technik bekannt, die vorliegende Erfindung betrifft allerdings eine Verbesserung dahingehend, dass die Zuverlässigkeit zum Identifizieren der verschiedenen Versorgungsspannungs-Typen weiter verbessert wird.

In diesem Zusammenhang soll zunächst anhand von Figur 2 eine denkbare Schaltungsanordnung vorgestellt werden, mit deren Hilfe eine Auswertung der eingangsseitigen Versorgungsspannung Vmains erfolgt.

Die in Figur 2 gezeigte Schaltungsanordnung 20 zeigt hierbei den eingangsseitigen Bereich des Betriebsgeräts 10, auf eine Darstellung der weiteren Komponenten des Betriebsgeräts 10, die insbesondere dann für die oben erwähnte Umsetzung der Versorgungsspannung Vmains in eine zum Betrieb der Leuchtmittel 50 geeignete Betriebsspannung verantwortlich sind, wurde aus Gründen der Übersichtlichkeit verzichtet. Dargestellt sind also in erster Linie diejenigen Bestandteile, die für die Auswertung und Beurteilung der Eingangsspannung Vmains verantwortlich sind.

Die an den Eingangsanschlüssen anliegende Spannung Vmains passiert also zunächst einen Störfilter 21, der wie dargestellt aus zwei symmetrischen Drosseln/Induktivitäten L1 und L2 und einem Kondensator C1 besteht, der die parallelen Drosseln L1, L2 miteinander verbindet. Der Ausgang des Störfilters 21 liegt an den Anschlüssen A1 und A2 der einen Diagonalen eines Brückengleichrichters B an, der von vier Brückendioden D1, D2, D3 und D4 gebildet ist. Ein Anschluss A4 der anderen Diagonalen des Brückengleichrichters B liegt an Masse M, der andere Anschluss A3 der anderen Brückendiagonalen führt eine Spannung, die dann durch die weiteren Komponenten des Betriebsgeräts weiter verarbeitet wird, wobei es hier wie oben bereits erwähnt nebensächlich ist, in welcher Weise diese Weiterbearbeitung erfolgt.

In diesem Zusammenhang ist anzumerken, dass für die nachfolgende Beschreibung des erfindungsgemäßen Konzepts und die entsprechenden Darstellungen in den weiteren Figuren der Einfachheit halber angenommen wird, dass die am Eingang des Störfilters 21 anliegende Versorgungsspannung Vmains durch den Störfilter 21 keine Veränderung erfährt, dass also die Versorgungsspannung Vmains auch an den Anschlüssen A1 und A2 des Brückengleichrichters B anliegt und in gleichgerichteter Form über den Ausgangsanschluss A3 abgegeben wird.

Diese am Ausgangsanschluss A3 anliegende Spannung wird ferner auch einem Spannungsteiler 22, gebildet aus den Widerständen R1 und R2 zugeführt, wobei die über den unteren Widerstand R2, der den Messwiderstand darstellt, abfallende Spannung dann durch die Auswerteschaltung 25 ausgewertet wird.

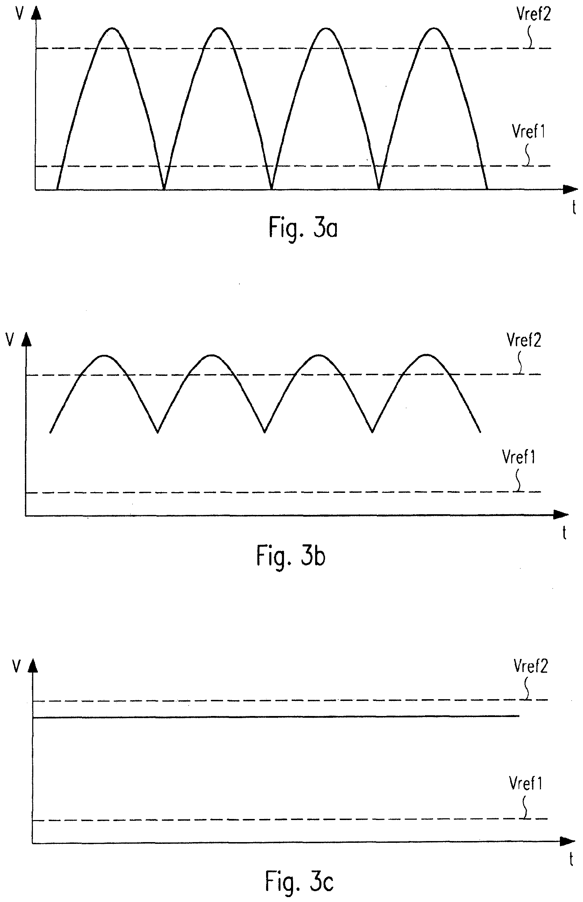

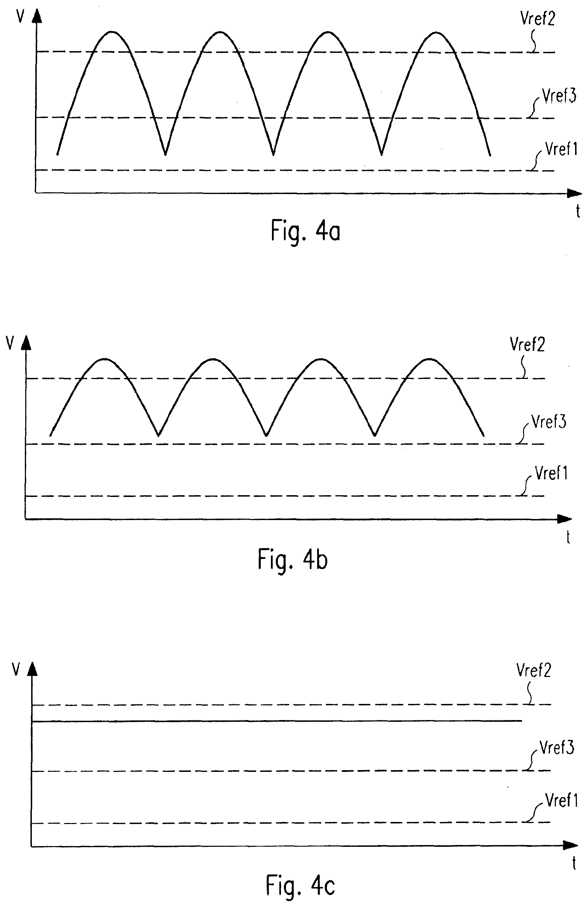

Die eigentliche Auswerteschaltung 25 besteht dann aus einem Entstör-Kondensator C2, insbesondere jedoch aus einem Komparator K, dem als erstes Eingangssignal die über den Messwiderstand R2 abfallende Spannung zugeführt wird. Ein zweites Eingangssignal für den Komparator K wird durch eine Anordnung bestehend aus einer Einheit 26 zur Erzeugung von Referenzspannungen und einem Multiplexer 27 erzeugt. Wahlweise wird also dann über den Multiplexer 27 eine der Referenzspannungen als weiteres Eingangssignal an den Komparator K übermittelt. Das Ausgangssignal des Komparators K wird dann beispielsweise durch eine entsprechende Auswerteschaltung 28 ausgewertet, die darauf basierend in der nachfolgend beschriebenen Weise die Versorgungsspannung-Typen erkennt und ggf. den Betrieb des Betriebsgeräts 10 anpasst. Diese Vorgehensweise zum Identifizieren des Versorgungsspannungs-Typs soll nachfolgend anhand der Figuren 3 und 4 näher erläutert werden.

Die Figuren 3a bis 3c zeigen hierbei zunächst den Verlauf der über den Messwiderstand R2 abfallenden Spannung V, die wie bereits erwähnt ein erstes Eingangssignal für den Komparator K darstellt. Dargestellt ist hierbei insbesondere der Spannungsverlauf für eine verhältnismäßig hohe ausgangsseitige Last, also beispielsweise für den Fall, dass die Leuchtmittel 50 bei einer hohen Helligkeit betrieben werden. In Figur 3a ist hierbei der Spannungsverlauf bei einer eingangsseitig anliegenden Versorgungs-Wechselspannung gezeigt, Figur 3b zeigt den Verlauf für eine Quasi-DC-Versorgung und Figur 3c zeigt das Messsignal im Falle einer reinen Versorgungs-Gleichspannung.

Während sich eine reine DC-Spannung offensichtlich stark von dem Spannungsverlauf bei einer Versorgungs-Wechselspannung unterscheidet, liegt eine durchaus gewisse Ähnlichkeit zwischen Versorgungs-Wechselspannung und Quasi-DC-Spannung vor. In beiden Fällen ergibt sich eine Welligkeit des Spannungssignals V, wobei der primäre Unterschied darin besteht, dass zwischen zwei Halbwellen das Signal im Falle einer Versorgungs-Wechselspannung auf null bzw. nahezu auf null abfällt, während hingegen bei der Quasi-DC-Versorgung die Welligkeit weniger stark ausgeprägt ist, insbesondere kein Abfall bis auf null vorliegt.

Zum Beurteilen des Typs der eingangsseitig anliegenden Spannung wird also dann durch den Multiplexer 27 zunächst eine niedrige Referenzspannung als weiteres Eingangssignal für den Komparator K zur Verfügung gestellt, welchen den Figuren 3a bis 3c mit Vrefl bezeichnet ist. Es handelt sich hierbei wie bereits erwähnt um eine niedrige Referenzspannung, die in erster Linie dazu dient, zu erkennen, ob überhaupt eingangsseitig an dem Gerät eine Spannung anliegt. Da das Betriebsgerät 10 sehr schnell reagieren muss für den Fall, dass ein Spannungsabfall auf null vorliegt, wird dieser Vergleich mit der niedrigen Referenzspannung Vrefl zunächst durchgeführt, um hier sicherzustellen, dass grundsätzlich eine Versorgungsspannung für das Gerät 10 zur Verfügung steht. Wie dabei die Figuren zeigen, wird dann am Ausgang des Komparators K einen Signal erhalten werden, welches kennzeichnet, dass diese niedrige Referenzspannung im Falle einer Versorgungs-Wechselspannung wiederholt über- und unterschritten wird, im Falle einer Versorgungsgleichspannung oder einer Quasi-DC-Spannung hingegen dauerhaft überschritten wird.

In einem zweiten Schritt wird durch den Multiplexer 27 dann eine von der Einheit 26 erzeugte hohe Referenzspannung Vref2 zur Verfügung gestellt, die ebenfalls in den Figuren 3a bis 3c gezeigt ist. Diese wird - wie erkennbar - nunmehr im Falle einer Versorgungs-Wechselspannung oder einer Quasi-DC-Spannung alternierend über- bzw. unterschritten, im Falle einer reinen Versorgungs-Gleichspannung hingegen wird diese zweite Referenzspannung Vref2 entweder dauerhaft überschritten oder - wie im Beispiel gezeigt - dauerhaft unterschritten.

In dem in den Figuren 3a bis 3c dargestellten Fall einer hohen Ausgangslast kann also durch den Vergleich des Messsignals mit den beiden Referenzspannungen Vrefl und Vrefl eindeutig zwischen den drei verschiedenen Versorgungsspannungs-Typen unterschieden werden und das Betriebsgerät 10 kann in geeigneter Weise hierauf reagieren und einen entsprechenden Betrieb für die Leuchtmittel 50 wählen.

Die Figuren 4a bis 4c zeigen hingegen nunmehr den Fall einer niedrigen Ausgangslast, der beispielsweise dann vorliegt, wenn die Leuchtmittel 50 mit niedriger Leistung, also beispielsweise bei sehr kleinen Dimmleveln betrieben werden. In diesem Fall ergibt sich das Problem, dass aufgrund der geringen ausgangsseitigen Last auch im Falle einer Versorgungs-Wechselspannung (Figur 4a) keine Null-Durchgänge vorliegen bzw. die gleichgerichtete Versorgungsspannung nicht mehr vollständig auf null abfällt. Der Verlauf des Messsignals nähert sich in diesem Fall also in etwa dem Verlauf des Signals im Fall einer Quasi-DC-Versorgungsspannung an, wobei insbesondere der Fall auftreten kann, dass der untere Referenzwert Vrefl nicht mehr wie im Fall der Figur 3a bei einer Versorgungs-Wechselspannung regelmäßig unter- und überschritten wird. Auf Basis eines Vergleichs mit den beiden Referenzspannungen Vrefl und Vrefl kann dann zwar also eine reine Gleichspannung eindeutig erkannt werden, eine Unterscheidung zwischen Versorgungs-Wechselspannung und Quasi-DC-Versorgungsspannung hingegen ist nicht mehr möglich.

Erfindungsgemäß ist deshalb vorgesehen, eine dritte Referenzspannung Vref3 zur Verfügung zu stellen, die dann ebenfalls durch den Multiplexer 27 dem Komparator K als weiteres Eingangssignal zur Verfügung gestellt wird. Wie in den Figuren 4a bis 4c erkennbar wird dabei die Höhe dieser dritten Referenzspannung Vref3 derart gewählt, dass sie zwischen den beiden zuvor beschriebenen Referenzspannungen Vrefl und Vref2 liegt, und zwar derart, dass sie wiederum auch bei einer kleinen Ausgangslast im Falle einer Versorgungs-Wechselspannung regelmäßig unter- oder überschritten wird, im Falle einer Quasi-DC-Versorgung hingegen dauerhaft überschritten wird. Dies ermöglicht dann wiederum eine Unterscheidung zwischen VersorgungsWechselspannung und Quasi-DC-Versorgungsspannung, sodass letztendlich auch in diesen Fällen eindeutig die drei verschiedenen Versorgungsspannungs-Typen identifiziert werden können. Dies stellt einen deutlichen Vorteil gegenüber bislang bekannten Lösungen dar, da nunmehr nicht nur sicher und zuverlässig ein Notzustand erkennt werden kann sondern eindeutig sogar zwischen den drei verschiedenen möglichen Versorgungsspannungs-Typen unterschieden werden kann. Das heißt, durch entsprechendes Auswählen einer eingangsseitig zur Verfügung gestellten Versorgungsspannungsart könnte also das Betriebsgerät 10 dazu veranlasst werden, drei unterschiedliche Betriebsarten einzunehmen, ohne dass dies durch zusätzliche externe Signale oder dergleichen veranlasst werden müsste.

Dabei ist besonderes bevorzugt vorgesehen, dass die Höhe der zusätzlich genutzten dritten Referenzspannung Vref3 variabel ist. Insbesondere kann hierbei vorgesehen sein, dass die Höhe der dritten Referenzspannung abhängig vom Dimmwert der Leuchtmittel 50 eingestellt wird. Wie oben erwähnt, beeinflusst der Dimmwert und damit die Leistung, bei der die Leuchtmittel 50 betrieben werden, die ausgangsseitig am Betriebsgerät 10 anliegende Last, die wiederum den Verlauf des Messsignals beeinflusst. Ein den Dimmwert berücksichtigender dritter Referenzspannungswert Vrerf3 erlaubt also eine nochmals genauere Unterscheidung zwischen den verschiedenen Versorgungsspannungs-Typen. Weiterhin bringt diese Ausführungsform den Vorteil mit sich, dass der Komparator K vielseitig eingesetzt werden kann und insgesamt der Aufbau der Komponenten, mit deren Hilfe der Typ der eingangsseitigen Versorgungsspannung erkannt werden kann, einfacher gehalten wird.

Selbstverständlich könnte im Vergleich zu der in Figur 2 dargestellten Schaltungsanordnung auch eine alternative Lösung realisiert werden, bei der auf die Nutzung des Multiplexers verzichtet wird. In diesem Fall mussten dann allerdings mehrere Komparatoren verwendet werden, um einen Vergleich des Messsignals mit den drei Referenzspannungen zu ermöglichen.

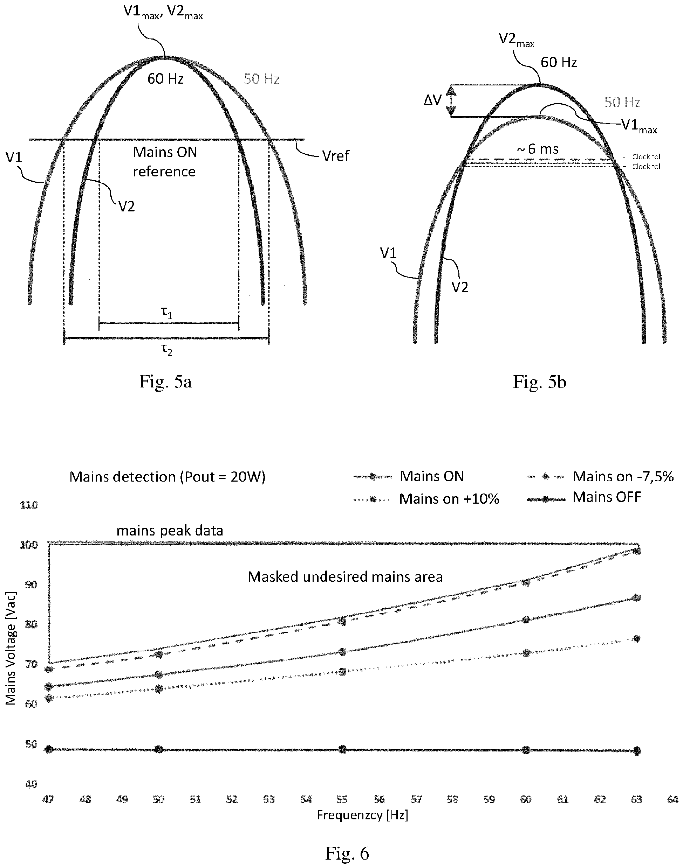

Eine andere vorteilhafte Weiterbildung des bislang beschriebenen erfindungsgemäßen Konzepts soll nachfolgend anhand der Figuren 5-7 beschrieben werden. Diese Weiterbildung betrifft einen Effekt, der bislang nicht berücksichtigt wurde, in Realität allerdings einen gewissen Einfluss auf den zuverlässigen Betrieb des Betriebsgeräts haben kann. Dieser Gedanke kann im Übrigen auch unabhängig von dem zuvor beschriebenen Vergleich der gleichgerichteten Versorgungsspannung mit insgesamt drei unterschiedlichen Referenzspannungen realisiert werden.

Dabei ist nämlich zu berücksichtigen, dass erfindungsgemäß das Anliegen einer Versorgungsspannung bzw. das Überschreiten einer entsprechenden Referenzspannung nur dann festgestellt wird, wenn dies über einen bestimmten Zeitraum hinweg von beispielsweise 6 ms erfolgt. Das heißt, erst wenn die Referenzspannung dauerhaft für mindestens 6 ms überschritten wird, wird dies durch die Bewertungseinheit in entsprechender Weise berücksichtigt, um ggf. kurzfristige Schwankungen auszugleichen.

Dies führt allerdings dazu, dass bei verschiedenen Frequenzen für die eingangsseitig anliegende Versorgungsspannung das Anliegen einer ausreichenden Versorgungsspannung bzw. das Überschreiten einer Referenzspannung in unterschiedlicher Weise festgestellt wird. Dieser Effekt ist in den Figuren 5a und 5b gezeigt, wobei Figur 5a zunächst die Halbwellen zweier verschiedener Versorgungsspannungen V1 und V2 zeigt, die zwar den gleichen Maximalwert Vlmax bzw. V2max, allerdings unterschiedliche Frequenzen aufweisen.

Dabei ist erkennbar, dass bei dem Beispiel von Figur 5a die Versorgungsspannung V1 mit niedrigerer Frequenz in Höhe von 50 Hz die Referenzspannung Vref in einem Zeitraum τ1 überschreitet, der länger ist als der Zeitraum τ2, in dem die Versorgungsspannung V2 mit einer höheren Frequenz von 60 Hz die Referenzspannung überschreitet. Wird nun davon ausgegangen, dass das Überschreiten der Referenzspannung Vref dann erkannt wird, wenn dies für einen Zeitraum von 6ms erfolgt, bedeutet dies - wie in Figur 5b dargestellt - dass die Versorgungsspannung V2 mit der höheren Frequenz von 60 Hz einen höheren Spitzenwert V2max aufweisen muss als die Versorgungsspannung V1 mit der niedrigeren Frequenz, um zu dem Ergebnis zu gelangen, dass der Referenzwert überschritten wurde bzw. eine ausreichende Versorgungsspannung anliegt.

Idealerweise müsste also die Höhe der Referenzspannung an die Frequenz der anliegenden Versorgungsspannung angepasst werden. Ferner könnten auch interne Abweichungen des Taktgebers der Schaltungsanordnung eine entsprechende Anpassung der Referenzspannung erfordern.

Da allerdings das Ermitteln der Frequenz der Versorgungsspannung sowie das entsprechende Anpassung eines damit zu vergleichenden Referenzwerts sehr aufwendig ist, wird üblicherweise ein generell gültiger Referenzwert verwendet, der allerdings dann derart gewählt werden muss, dass über den gesamten denkbaren Frequenzbereich, in dem die Versorgungsspannung zur Verfügung gestellt wird, ein zuverlässiges Erkennen einer eingangsseitigen Versorgungsspannung ermöglicht ist. Entsprechend den Darstellungen der Figuren 5a und 5b bedeutet dies, dass der Referenzwert Vref so weit abgesenkt werden muss, dass sichergestellt ist, dass auch bei der maximal anliegenden Versorgungsspannungsfrequenz sowie möglichen Abweichungen des internen Taktgebers noch zuverlässig das Anliegen einer Versorgungsspannung erkannt wird.

Ein entsprechend gewählter Referenzwert, der sicherstellt, dass beispielsweise bei der maximal zu berücksichtigenden Frequenz von 63 Hz das Anliegen einer Versorgungsspannung mit einen Spitzenwert von 100 Volt zuverlässig ermöglicht, wird allerdings dazu führen, dass bei niedrigeren Frequenzen bereits geringere Spitzenwerte der Versorgungsspannung dazu führen, dass diese als ausreichende Versorgungsspannung interpretiert wird. Entsprechend der Darstellung in Figur 6 würde beispielsweise eine niedrigere Frequenz von 47 Hz der Versorgungsspannung dazu führen, das bereits bei einem Spitzenwert von 70 Volt eine ausreichende Versorgungsspannung festgestellt wird, wobei dieser Wert dann kontinuierlich ansteigt, bis er schließlich bei der maximalen Frequenz von 63 Hz dem tatsächlich gewünschten Spitzenwert von 100 Volt entspricht. Da allerdings ein vorzeitiges Aktivieren des Betriebsgeräts bei zu niedrigen Versorgungsspannungen unerwünscht ist und insbesondere auch zu gravierenden Problemen während des späteren Betriebes führen kann, muss eine Lösung dafür gefunden werden, die zuvor beschriebenen frequenzabhängigen Effekte zu berücksichtigen.

Die erfindungsgemäße Lösung besteht darin, ein zusätzliches Kriterium zu schaffen dafür, dass tatsächlich das Anliegen einer ausreichenden Versorgungsspannung erkannt wird. Hierfür wird erfindungsgemäß auf einen Parameter zurückgegriffen, der in vielen Betriebsgeräten für Leuchtmittel ohnehin automatisch erfasst wird und damit ohne Mehraufwand zur Verfügung steht. Es handelt sich um den Spitzenwert der überwachten Versorgungsspannung bzw. der gleichgerichteten Versorgungsspannung. Dieser Spitzenwert ist unabhängig von der jeweiligen Frequenz und bietet dementsprechend ein zusätzliches Kriterium dafür, zu bestimmen, ob die an dem Betriebsgerät anliegende Versorgungsspannung tatsächlich ausreichend ist. Ein weiterer Vorteil des Spitzenwerts ist wie bereits erwähnt, dass dieser in vielen Fällen ohnehin kontinuierlich überwacht und erfasst wird, so dass kein zusätzlicher Aufwand erforderlich ist, um auf diese Information zurückzugreifen.

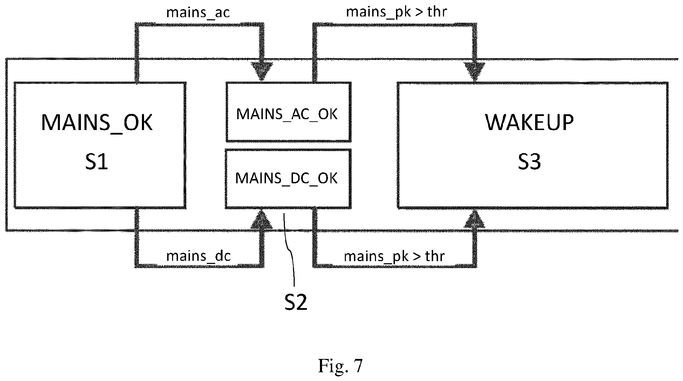

Das Beurteilen, ob eine Versorgungsspannung an einem Betriebsgerät anliegt, um welchen Versorgungsspannungs-Typ es sich handelt und ob die Versorgungsspannung tatsächlich ausreichend ist, erfolgt dementsprechend gemäß der vorteilhaften Weiterbildung nach einem erweiterten Schema, wie es in Figur 7 gezeigt ist.

Dargestellt ist hier schematisch die sog. State Machine, also die logische Vorgehensweise der Bewertungseinheit, die letztendlich entscheidet, ob eine ausreichende Versorgungsspannung anliegt und dementsprechend das Betriebsgerät gestartet wird und welcher Modus für den späteren Betrieb gewählt wird.

In einem ersten Schritt S 1 erfolgt dabei zunächst das grundsätzliche Überprüfen, ob eine Versorgungsspannung anliegt, wobei weiterhin - beispielsweise in der anhand der Figuren 1 -4 beschriebenen Weise - festgestellt wird, ob es sich um eine Wechselspannung oder eine Gleichspannung handelt. Zum Feststellen des grundsätzlichen Anliegens einer Versorgungsspannung sowie des Ermittelns des Versorgungsspannungs-Typs werden dann wie oben beschrieben Referenzspannungswerte verwendet, die sicherstellen, dass auch in den Extremsituationen, insbesondere im Falle einer hohen Frequenz der Versorgungsspannung sowie einem ungünstigen Abweichen des internen Taktgebers noch ein zuverlässiges Erkennen des Überschreitens der Referenzspannungen erkannt wird.

Diese Information wird dann an einen nachfolgenden Block S2 ausgegeben, der dann in einem weiteren Schritt die zur Verfügung stehenden Spitzenwerte mit Referenzwerten vergleicht. Hierbei ist insbesondere vorgesehen, dass abhängig vom Versorgungsspannungstyp geeignete Referenzwerte gewählt werden, mit denen der Spitzenwert der Versorgungsspannung verglichen wird. Erst wenn auch dieser zweite Test positiv ausfällt wird festgestellt, dass eine ausreichende Versorgungsspannung eingangsseitig anliegt und dementsprechend der weitere Betrieb des Geräts gestartet S3. Wie bereits erwähnt kann hier dann auch die Entscheidung getroffen werden, in welchen Betriebsmodus das Gerät versetzt wird. Das Beurteilen, ob auch das zweite Kriterium erfüllt ist, kann dabei wiederum durch die Auswerteschaltung 25 bzw. eine entsprechende Logik, die Bestandteil der Auswerteschaltung 25 ist oder mit dieser verbunden ist, erfolgen.

Die erfindungsgemäße Lösung der ergänzenden Berücksichtigung des Spitzenwerts der Versorgungsspannung gewährleistet hierbei, dass über den gesamten Frequenzbereich hinweg zuverlässig das Anliegen einer ausreichenden Versorgungsspannung erkannt wird, insbesondere jedoch bei niedrigen Frequenzen nicht vorzeitig eine Aktivierung des Betriebsgeräts erfolgt. Die Betriebssicherheit des Geräts wird hierbei durch einen nur geringen Mehraufwand deutlich erhöht.

Dabei ist nochmals darauf hinzuweisen, dass die in den Figuren 5 bis 7 dargestellte Vorgehensweise nicht zwingend mit dem Vergleich der gleichgerichteten Versorgungsspannung mit insgesamt drei Referenzwerten kombiniert werden muss. Auch für den Fall, dass lediglich anhand eines Vergleichs mit einer einzigen Referenzspannung grundsätzlich erkannt wird, ob eine Versorgungswechselspannung an dem Betriebsgerät anliegt oder nicht, kann das sich aufgrund der frequenzabhängigen Effekte ergebene Problem vermieden werden.

Mit Hilfe der beschriebenen Maßnahmen kann also in zuverlässiger Weise das Anliegen einer ausreichenden Versorgungspannung sowie der Typ der Versorgungsspannung erkannt werden, wobei dann abhängig von der Versorgungsspannungsart ein geeigneter Betriebsmodus gewählt werden kann. Dabei kann vorgesehen sein, dass ein Benutzer drahtgebunden über eine Schnittstelle des Betriebsgeräts 10 oder drahtlos die Betriebsmodi definiert, welche in Abhängigkeit der erkannten Versorgungsspannungsart auftreten sollen. Zusätzlich kann hierbei die Möglichkeit gegeben sein, dass der Benutzer die Betriebsmodi im Betrieb des Betriebsgerätes 10 umändern kann. Auf diesem Wege kann dann beispielsweise vorgegeben werden, dass bei einer Quasi-DC-Spannung eingestellt wird, dass ein Notlichtbetrieb erfolgen oder ein Normalbetrieb erfolgen soll. Des Weiteren kann der Benutzer beispielsweise einstellen, dass in Abhängigkeit der erkannten Versorgungsspannungsart ein bestimmter Dimmlevel eingestellt wird. Die Funktionsweise des Betriebsgeräts 10 kann also äußerst flexibel an die verschiedenen Spannungsversorgungssysteme und Vorgehensweisen, um einen Notbetrieb zu signalisieren, angepasst werden.

## Patentansprüche

1. Verfahren zum Identifizieren des Anliegens einer ausreichenden eingangsseitigen Versorgungsspannung (Vₘₐᵢₙₛ) an einem Betriebsgerät (10),
wobei eine dem Betriebsgerät (10) zugeführte Versorgungsspannung (Vₘₐᵢₙₛ) gleichgerichtet und nachfolgend mit drei Referenzspannungen (Vrefl, Vref2, Vref3) verglichen wird,
und wobei weiterhin zum Identifizieren des Anliegens einer ausreichenden eingangsseitigen Versorgungsspannung (Vₘₐᵢₙₛ) das Anliegen einer eingangsseitigen Versorgungsspannung (Vₘₐᵢₙₛ) nur festgestellt wird, wenn in einer zeitlichen Messung die gleichgerichtete Versorgungsspannung mindestens eine der drei Referenzspannungen (Vrefl, Vref2, Vref3) für einen vorgegebenen Zeitraum überschreitet,
**dadurch gekennzeichnet,**
**dass** zusätzlich auch der Spitzenwert der zugeführten Versorgungsspannung (Vₘₐᵢₙₛ) oder der gleichgerichteten Versorgungsspannung erfasst wird, und
**dass** das Anliegen einer ausreichenden eingangsseitigen Versorgungsspannung (Vₘₐᵢₙₛ) nur dann festgestellt wird, wenn
i. anhand des Vergleichs der gleichgerichteten Versorgungsspannung mit den drei Referenzspannungen (Vrefl, Vref2, Vref3) das Anliegen einer Versorgungsspannung festgestellt wird; und
ii. der Spitzenwert eine vorgegebene Bedingung erfüllt, wobei der Spitzenwert einen vorgegebenen Referenzwert überschreitet:
wobei anhand des Vergleichs der gleichgerichteten Versorgungsspannung mit den drei Referenzspannungen (Vrefl, Vref2, Vref3) zunächst der Typ der zur Verfügung stehenden Versorgungsspannung (Vₘₐᵢₙₛ) ermittelt wird, und
**dass** der Spitzenwert mit dem vorgegebenen Referenzwert verglichen wird, wobei der vorgegebene Referenzwert von dem zuvor bestimmten Typ der zur Verfügung stehenden Versorgungsspannung (Vₘₐᵢₙₛ) abhängig ist.

2. Verfahren nach Anspruch 1,
wobei die gleichgerichtete Versorgungsspannung mit einer ersten, niedrigen Referenzspannung (Vref1), einer zweiten, hohen Referenzspannung (Vref2) sowie einer dritten Referenzspannung (Vref3) verglichen wird, welche zwischen der ersten und der zweiten Referenzspannung (Vref1, Vref2) liegt,
und dass abhängig von den Vergleichsergebnissen ein Typ der zur Verfügung stehenden Versorgungsspannung (Vₘₐᵢₙₛ) bestimmt wird.

3. Verfahren nach Anspruch 2, wobei die Höhe der dritten Referenzspannung (Vref3) veränderbar ist.

4. Verfahren nach Anspruch 2 oder 3, wobei die Vergleiche der gleichgerichteten Versorgungsspannung mit dei drei Referenzspannungen (Vrefl, Vref2, Vref3) zeitlich aufeinanderfolgend durchgeführt werden.

5. Verfahren nach einem der Ansprüche 2 bis 4,
wobei der Typ der zur Verfügung stehenden Versorgungsspannung (Vₘₐᵢₙₛ) identifiziert wird, derart
dass eine AC-Versorgungsspannung erkannt wird, wenn die zweite und dritte Referenzspannung (Vref2, Vref3) alternierend sowohl über- als auch unterschritten wird,
dass eine DC-Versorgungsspannung erkannt wird, wenn die dritte Referenzspannung (Vref3) dauerhaft überschritten und die zweite Referenzspannung (Vref2) dauerhaft über- oder unterschritten wird,
und dass eine Quasi-DC-Versorgungsspannung erkannt wird, wenn die dritte Referenzspannung (Vref3) dauerhaft überschritten und die zweite Referenzspannung (Vref2) alternierend über- und unterschritten wird.

6. Verfahren nach Anspruch 5, wobei abhängig von dem ermittelten Typ der zur Verfügung stehenden Versorgungsspannung (Vₘₐᵢₙₛ) ein Betriebsmodus für das Betriebsgerät (10) zum Betreiben der Leuchtmittel (50) ausgewählt wird.

7. Verfahren nach Anspruch 6, wobei bei zumindest einem Typ der zur Verfügung stehenden Versorgungsspannung (Vₘₐᵢₙₛ), insbesondere bei einer DC-Versorgungsspannung oder einer Quasi-DC-Versorgungsspannung ein Notbetrieb ausgewählt wird.

8. Verfahren nach Anspruch 6 oder 7, wobei durch einen Benutzer über eine drahtgebundene Schnittstelle des Betriebsgeräts (10) oder über Mittel für eine drahtlose Kommunikation des Betriebsgeräts (10) Betriebsmodi für das Betriebsgerät (10) definiert werden, welche in Abhängigkeit des ermittelten Typs der zur Verfügung stehenden Versorgungsspannung (Vₘₐᵢₙₛ) auftreten sollen.

9. Schaltungsanordnung zum Identifizieren des Anliegens einer ausreichenden eingangsseitigen Versorgungsspannung (Vₘₐᵢₙₛ) an einem Betriebsgerät (10) für Leuchtmittel (50),
wobei die Schaltungsanordnung (20) Mittel zum Gleichrichten (B) der dem Betriebsgerät (10) zugeführten Versorgungsspannung (Vₘₐᵢₙₛ) sowie zum nachfolgenden Vergleichen mit drei Referenzspannungen (Vrefl, Vref2, Vref3) aufweist,
und wobei ferner eine Bewertungseinheit (28) vorgesehen ist, welche zum Identifizieren des Anliegens einer ausreichenden eingangsseitigen Versorgungsspannung (Vₘₐᵢₙₛ) das Anliegen einer eingangsseitigen Versorgungsspannung (Vₘₐᵢₙₛ) nur festgestellt, wenn die gleichgerichtete Versorgungsspannung mindestens eine der drei Referenzspannungen (Vrefl, Vref2, Vref3) für einen vorgegebenen Zeitraum überschreitet,
**dadurch gekennzeichnet,**
**dass** die Schaltungsanordnung dazu ausgebildet ist, zusätzlich den Spitzenwert der zugeführten Versorgungsspannung (Vₘₐᵢₙₛ) oder der gleichgerichteten Versorgungsspannung zu erfassen, und
**dass** das Anliegen einer ausreichenden eingangsseitigen Versorgungsspannung (Vₘₐᵢₙₛ) nur dann festgestellt wird, wenn
i. anhand des Vergleichs der gleichgerichteten Versorgungsspannung mit den drei Referenzspannungen (Vrefl, Vref2, Vref3) das Anliegen einer Versorgungsspannung festgestellt wird; und
ii. der Spitzenwert eine vorgegebene Bedingung erfüllt, wobei der Spitzenwert einen vorgegebenen Referenzwert überschreitet;
wobei die Schaltungsanordnung dazu ausgebildet ist, anhand des Vergleichs der gleichgerichteten Versorgungsspannung mit den drei Referenzspannungen (Vrefl, Vref2, Vref3) zunächst den Typ der zur Verfügung stehenden Versorgungsspannung (Vₘₐᵢₙₛ) zu ermitteln, und
**dass** der Spitzenwert mit dem vorgegebenen Referenzwert verglichen wird, wobei der vorgegebene Referenzwert von dem zuvor bestimmten Typ der zur Verfügung stehenden Versorgungsspannung (Vₘₐᵢₙₛ) abhängig ist.

10. Schaltungsanordnung nach Anspruch 9, wobei die Schaltungsanordnung dazu ausgebildet ist:
a) die gleichgerichtete Versorgungsspannung mit einer ersten, niedrigen Referenzspannung (Vref1), einer zweiten, hohen Referenzspannung (Vref2) sowie einer dritten Referenzspannung (Vref3) zu vergleichen, welche zwischen der ersten und der zweiten Referenzspannung (Vrefl, Vref2) liegt, und
b) abhängig von den Vergleichsergebnissen einen Typ der zur Verfügung stehenden Versorgungsspannung (Vₘₐᵢₙₛ) zu bestimmen.

11. Betriebsgerät (10) zum Betreiben von Leuchtmitteln (50), aufweisend eine Schaltungsanordnung nach einem der Ansprüche 9 oder 10.

12. Betriebsgerät nach Anspruch 11, wobei das Betriebsgerät (10) dazu ausgebildet ist, bei Ermitteln eines vorgegebenen Typs der zur Verfügung stehenden Versorgungsspannung (Vₘₐᵢₙₛ), insbesondere bei einer DC-Versorgungsspannung oder einer Quasi-DC-Versorgungsspannung die Leuchtmittel (50) in einem Notbetrieb zu betreiben.

13. Betriebsgerät nach Anspruch 12, wobei dieses eine drahtgebundene Schnittstelle oder Mittel für eine drahtlose Kommunikation aufweist, über welche Betriebsmodi für das Betriebsgerät (10) definierbar sind, welche in Abhängigkeit des ermittelten Typs der zur Verfügung stehenden Versorgungsspannung (Vₘₐᵢₙₛ) auftreten sollen.

## Claims

1. Method for identifying the presence of a sufficient input-side supply voltage (Vₘₐᵢₙₛ) on an operating device (10),
a supply voltage (Vₘₐᵢₙₛ) supplied to the operating device (10) being rectified and subsequently compared with three reference voltages (Vrefl, Vref2, Vref3),
and, for the purpose of identifying the presence of a sufficient input-side supply voltage (Vₘₐᵢₙₛ), the presence of an input-side supply voltage (Vₘₐᵢₙₛ) only being determined if the rectified supply voltage exceeds at least one of the three reference voltages (Vrefl, Vref2, Vref3) for a predefined period of time in a time measurement,
**characterized in that**
the peak value of the supplied supply voltage (Vₘₐᵢₙₛ) or of the rectified supply voltage is additionally detected, and
**in that** the presence of a sufficient input-side supply voltage (Vₘₐᵢₙₛ) is only determined if
i. the presence of a supply voltage is determined on the basis of the comparison of the rectified supply voltage with the three reference voltages (Vrefl, Vref2, Vref3); and
ii. the peak value satisfies a predefined condition whereby the peak value exceeds a predefined reference value;
the type of the available supply voltage (Vₘₐᵢₙₛ) first being determined on the basis of the comparison of the rectified supply voltage with the three reference voltages (Vref1, Vref2, Vref3), and
**in that** the peak value is compared with the predefined reference value, the predefined reference value being dependent on the previously determined type of the available supply voltage (Vₘₐᵢₙₛ).

2. Method according to claim 1,
wherein the rectified supply voltage is compared with a first, low reference voltage (Vref1), a second, high reference voltage (Vref2) and a third reference voltage (Vref3) which is between the first and the second reference voltage (Vrefl, Vref2),
and a type of the available supply voltage (Vₘₐᵢₙₛ) is determined on the basis of the comparison results.

3. Method according to claim 2,
wherein the level of the third reference voltage (Vref3) is variable.

4. Method according to either claim 2 or claim 3,
wherein the comparisons of the rectified supply voltage with the three reference voltages (Vrefl, Vref2, Vref3) are carried out in succession.

5. Method according to any of claims 2 to 4,
wherein the type of the available supply voltage (Vₘₐᵢₙₛ) is identified by
an AC supply voltage being detected if the second and the third reference voltage (Vref2, Vref3) are alternately exceeded and not met,
a DC supply voltage being detected if the third reference voltage (Vref3) is continuously exceeded and the second reference voltage (Vref2) is continuously exceeded or not met,
and a quasi-DC supply voltage being detected if the third reference voltage (Vref3) is continuously exceeded and the second reference voltage (Vref2) is alternately exceeded and not met.

6. Method according to claim 5,
wherein an operating mode for the operating device (10) for operating the lamps (50) is selected on the basis of the determined type of the available supply voltage (Vₘₐᵢₙₛ).

7. Method according to claim 6,
wherein in the case of at least one type of the available supply voltage (Vₘₐᵢₙₛ), in particular in the case of a DC supply voltage or a Quasi-DC supply voltage, an emergency operation is selected.

8. Method according to claim 6 or 7,
wherein operating modes for the operating device (10) are defined by a user via a wired interface of the operating device (10) or via means for wireless communication of the operating device (10), which operating modes are to occur depending on the determined type of the available supply voltage (Vₘₐᵢₙₛ).

9. Circuit arrangement for identifying the presence of a sufficient input-side supply voltage (Vₘₐᵢₙₛ) on an operating device (10) for lamps (50),
the circuit arrangement (20) comprising means for rectifying (B) the supply voltage (Vₘₐᵢₙₛ) supplied to the operating device (10) and for subsequent comparison with three reference voltages (Vrefl, Vref2, Vref3),
and an evaluation unit (28) also being provided, which, for the purpose of identifying the presence of a sufficient input-side supply voltage (Vₘₐᵢₙₛ), only determines the presence of an input-side supply voltage (Vₘₐᵢₙₛ) if the rectified supply voltage exceeds at least one of the three reference voltages (Vrefl, Vref2, Vref3) for a predefined period of time,
**characterized in that**
the circuit arrangement is designed to additionally detect the peak value of the supplied supply voltage (Vₘₐᵢₙₛ) or of the rectified supply voltage, and
**in that** the presence of a sufficient input-side supply voltage (Vₘₐᵢₙₛ) is only determined if
i. the presence of a supply voltage is determined on the basis of the comparison of the rectified supply voltage with the three reference voltages (Vrefl, Vref2, Vref3); and
ii. the peak value satisfies a predefined condition whereby the peak value exceeds a predefined reference value;
the circuit arrangement being designed to first determine the type of the available supply voltage (Vₘₐᵢₙₛ) on the basis of the comparison of the rectified supply voltage with the three reference voltages (Vref1, Vref2, Vref3), and
**in that** the peak value is compared with the predefined reference value, the predefined reference value being dependent on the previously determined type of the available supply voltage (Vₘₐᵢₙₛ).

10. Circuit arrangement according to claim 9,
wherein the control unit is designed to:
a) compare the rectified supply voltage with a first, low reference voltage (Vref1), a second, high reference voltage (Vref2) and a third reference voltage (Vref3) which is between the first and the second reference voltage (Vref1, Vref2), and
b) determine a type of the available supply voltage (Vₘₐᵢₙₛ) on the basis of the comparison results.

11. Operating device (10) for operating lamps (50), comprising a circuit arrangement according to either claim 9 or claim 10.

12. Operating device according to claim 11,
wherein the operating device (10) is designed to operate the lamps (50) in an emergency operation when a predefined type of the available supply voltage (Vₘₐᵢₙₛ) is determined, in particular in the case of a DC supply voltage or a quasi-DC supply voltage.

13. Operating device according to claim 12,
wherein said device has a wired interface or means for wireless communication, via which operating modes for the operating device (10) can be defined, which operating modes are to occur depending on the determined type of the available supply voltage (Vₘₐᵢₙₛ).

## Revendications

1. Procédé pour l'identification de l'application d'une tension d'alimentation (Vₘₐᵢₙₛ) suffisante côté entrée à un appareil de fonctionnement (10),
une tension d'alimentation (Vₘₐᵢₙₛ) fournie à l'appareil de fonctionnement (10) étant redressée et ensuite comparée à trois tensions de référence (Vrefl, Vref2, Vref3),
et en outre, pour l'identification de l'application d'une tension d'alimentation (Vₘₐᵢₙₛ) suffisante côté entrée, l'application d'une tension d'alimentation (Vₘₐᵢₙₛ) côté entrée n'étant constatée que lorsqu'au cours d'une mesure temporelle, la tension d'alimentation redressée est supérieure à au moins l'une des trois tensions de référence (Vrefl, Vref2, Vref3) pendant une période de temps spécifiée,
**caractérisé en ce que**,
en plus, la valeur de crête de la tension d'alimentation (Vₘₐᵢₙₛ) fournie ou de la tension d'alimentation redressée est également détectée et
**en ce que** l'application d'une tension d'alimentation (Vₘₐᵢₙₛ) suffisante côté entrée n'est constatée que lorsque
i. à l'aide de la comparaison de la tension d'alimentation redressée aux trois tensions de référence (Vrefl, Vref2, Vref3), l'application d'une tension d'alimentation est constatée ; et
ii. la valeur de crête répond à une condition spécifiée, la valeur de crête étant supérieure à une valeur de référence spécifiée ;
le type de la tension d'alimentation (Vₘₐᵢₙₛ) à disposition étant d'abord déterminé à l'aide de la comparaison de la tension d'alimentation redressée aux trois tensions de référence (Vrefl, Vref2, Vref3) et
**en ce que** la valeur de crête est comparée à la valeur de référence spécifiée, la valeur de référence spécifiée dépendant du type, prédéterminé, de tension d'alimentation (Vₘₐᵢₙₛ) à disposition.

2. Procédé selon la revendication 1,
la tension d'alimentation redressée étant comparée à une première tension de référence basse (Vref1), à une deuxième tension de référence élevée (Vref2) ainsi qu'à une troisième tension de référence (Vref3) qui est située entre la première et la deuxième tension de référence (Vrefl, Vref2),
**et en ce qu'**en fonction des résultats de comparaison, un type de tension d'alimentation (Vₘₐᵢₙₛ) à disposition étant déterminé.

3. Procédé selon la revendication 2,
le niveau de la troisième tension de référence (Vref3) étant modifiable.

4. Procédé selon la revendication 2 ou 3,
les comparaisons de la tension d'alimentation redressée aux trois tensions de référence (Vrefl, Vref2, Vref3) étant effectuées successivement dans le temps.

5. Procédé selon l'une des revendications 2 à 4,
le type de tension d'alimentation (Vₘₐᵢₙₛ) à disposition étant identifié de manière telle
qu'une tension d'alimentation de CA est détectée lorsque la deuxième et la troisième tension de référence (Vref2, Vref3) sont dépassées en alternance, tant vers le haut que vers le bas,
qu'une tension d'alimentation de CC est détectée lorsque la troisième tension de référence (Vref3) est dépassée durablement vers le haut et la deuxième tension de référence (Vref2) est dépassée durablement vers le haut ou vers le bas,
et qu'une tension d'alimentation de quasi-CC est détectée lorsque la troisième tension de référence (Vref3) est dépassée durablement vers le haut et la deuxième tension de référence (Vref2) est dépassée en alternance vers le haut et vers le bas.

6. Procédé selon la revendication 5,
un mode de fonctionnement pour l'appareil de fonctionnement (10), pour le fonctionnement des moyens d'éclairage (50), étant choisi en fonction du type déterminé de tension d'alimentation (Vₘₐᵢₙₛ) à disposition.

7. Procédé selon la revendication 6,
un fonctionnement de secours étant choisi dans le cas d'au moins un type de tension d'alimentation (Vₘₐᵢₙₛ) à disposition, en particulier dans le cas d'une tension d'alimentation de CC ou d'une tension d'alimentation de quasi-CC.

8. Procédé selon la revendication 6 ou 7,
des modes de fonctionnement pour l'appareil de fonctionnement (10) étant définis par un utilisateur par l'intermédiaire d'une interface câblée de l'appareil de fonctionnement (10) ou par l'intermédiaire de moyens pour une communication sans fil de l'appareil de fonctionnement (10), lesquels modes de fonctionnement devant se produire en fonction du type déterminé de tension d'alimentation (Vₘₐᵢₙₛ) à disposition.

9. Ensemble de circuits pour l'identification de l'application d'une tension d'alimentation (Vₘₐᵢₙₛ) suffisante côté entrée à un appareil de fonctionnement (10) de moyens d'éclairage (50),
l'ensemble de circuits (20) présentant des moyens pour le redressement (B) de la tension d'alimentation (Vₘₐᵢₙₛ) fournie à l'appareil de fonctionnement (10) ainsi que pour la comparaison consécutive à trois tensions de référence (Vrefl, Vref2, Vref3),
et en outre une unité d'évaluation (28) étant prévue, qui, pour l'identification de l'application d'une tension d'alimentation (Vₘₐᵢₙₛ) suffisante côté entrée, ne constate l'application d'une tension d'alimentation (Vₘₐᵢₙₛ) côté entrée que lorsque la tension d'alimentation redressée est supérieure à au moins l'une des trois tensions de référence (Vrefl, Vref2, Vref3) pendant une période de temps spécifiée,
**caractérisé en ce que**
l'ensemble de circuits est conçu pour détecter, en plus, la valeur de crête de la tension d'alimentation (Vₘₐᵢₙₛ) fournie ou de la tension d'alimentation redressée et
**en ce que** l'application d'une tension d'alimentation (Vₘₐᵢₙₛ) suffisante côté entrée n'est constatée que lorsque
i. à l'aide de la comparaison de la tension d'alimentation redressée aux trois tensions de référence (Vrefl, Vref2, Vref3), l'application d'une tension d'alimentation est constatée ; et
ii. la valeur de crête répond à une condition spécifiée, la valeur de crête étant supérieure à une valeur de référence spécifiée ;
l'ensemble de circuits étant conçu pour déterminer d'abord, à l'aide de la comparaison de la tension d'alimentation redressée aux trois tensions de référence (Vrefl, Vref2 et Vref3), le type de la tension d'alimentation (Vₘₐᵢₙₛ) à disposition et
**en ce que** la valeur de crête est comparée à la valeur de référence spécifiée, la valeur de référence spécifiée dépendant du type, prédéterminé, de tension d'alimentation (Vₘₐᵢₙₛ) à disposition.

10. Ensemble de circuits selon la revendication 9,
l'ensemble de circuits étant conçu pour :
a) comparer la tension d'alimentation redressée à une première tension de référence basse (Vref1), à une deuxième tension de référence élevée (Vref2) ainsi qu'à une troisième tension de référence (Vref3) qui est située entre la première et la deuxième tension de référence (Vrefl, Vref2), et
b) déterminer, en fonction des résultats de comparaison, un type de tension d'alimentation (Vₘₐᵢₙₛ) à disposition.

11. Appareil de fonctionnement (10) pour le fonctionnement des moyens d'éclairage (50), présentant un ensemble de circuits selon l'une des revendications 9 ou 10.

12. Appareil de fonctionnement selon la revendication 11,
l'appareil de fonctionnement (10) étant conçu pour faire fonctionner les moyens d'éclairage (50) dans un fonctionnement de secours lors de la détermination d'un type spécifié de tension d'alimentation (Vₘₐᵢₙₛ) à disposition, en particulier dans le cas d'une tension d'alimentation de CC ou d'une tension d'alimentation de quasi-CC.

13. Appareil de fonctionnement selon la revendication 12,
celui-ci présentant une interface câblée ou des moyens pour une communication sans fil par l'intermédiaire de laquelle/desquels des modes de fonctionnement pour l'appareil de fonctionnement (10) peuvent être définis, qui doivent se produire en fonction du type déterminé de tension d'alimentation (Vₘₐᵢₙₛ) à disposition.
